# EUROPEAN PATENT APPLICATION

(11) **EP 4 560 510 A1**
(43) Date of publication of application: **28.05.2025**
(21) Application number: 23859291.9
(22) Date of filing: 28.08.2023
(51) Int. Cl.: G06F 21/57

(54) **HOTFIX METHOD AND RELATED APPARATUS**

(30) Priority: 30.08.2022 CN 202211048918
(71) Applicant: Huawei Technologies Co., Ltd., Shenzhen, Guangdong 518129 (CN)
(72) Inventor: ZHU, Ling, Shenzhen, Guangdong 518129 (CN); LUO, Longjun, Shenzhen, Guangdong 518129 (CN); LI, Zongwu, Shenzhen, Guangdong 518129 (CN); SANG, Yan, Shenzhen, Guangdong 518129 (CN)
(74) Representative: Pfenning, Meinig & Partner mbB
(86) International application number: PCT/CN2023/115208
(87) International publication number: WO 2024/046260

(57) **Abstract**

Embodiments of this application disclose a hot patching method and a related apparatus. The method includes: determining a patch file generated for a plurality of objective functions; determining M target processes from N processes based on the plurality of objective functions, and recording initial call information of the M target processes, where the initial call information includes information indicating that each of the target processes calls the plurality of objective functions; determining current call information corresponding to each of the M target processes, where each piece of the current call information includes information indicating that a corresponding target process currently calls the plurality of objective functions; and separately performing a hot patching operation on the M target processes based on the initial call information, the current call information corresponding to each of the target processes, and the patch file. According to embodiments of this application, vulnerability repairing can be performed on a software library running on an electronic device, without restarting a process.

## Description

This application claims priority to Chinese Patent Application No. 202211048918.4, filed with the China National Intellectual Property Administration on August 30, 2022 and entitled "HOT PATCHING METHOD AND RELATED APPARATUS", which is incorporated herein by reference in its entirety.

### TECHNICAL FIELD

This application relates to the field of computer technologies, and in particular, to a hot patching method and a related apparatus.

### BACKGROUND

Currently, a kernel of a server can rectify a kernel defect based on a hot patch without restarting a system, which is referred to as kernel hot patching. However, to securely operate the server, it is not enough to fix only the kernel of the server. Processes, threads, and shared software libraries also need to be patched. Otherwise, the server may be exposed to attacks that exploit vulnerabilities such as Heartbleed or GHOST. Usually, a common way to deal with library vulnerabilities in the server is to restart the server or restart an application that causes a shutdown and a vulnerability window. In addition, administrators rarely know which libraries are being used by a service, and then they need to restart the entire server to update the service.

Therefore, how to provide a hot patching method to repair a vulnerability in a software library running on a server without restarting a process, and resolve a loss of service suspension caused by restarting the server or an application is a problem to be urgently resolved.

### SUMMARY

To resolve the foregoing technical problem, embodiments of this application provide a hot patching method and a related apparatus, to repair a vulnerability in a software library running on a server without restarting a process, thereby resolving a loss of service suspension caused by restarting the server or an application.

According to a first aspect, an embodiment of this application provides a hot patching method. The method includes: determining a patch file generated for a plurality of objective functions; determining M target processes from N processes based on the plurality of objective functions, and recording initial call information of the M target processes, where the initial call information includes information indicating that each of the target processes calls the plurality of objective functions, N and M are integers greater than 0, and N is greater than or equal to M; determining current call information corresponding to each of the M target processes, where each piece of the current call information includes information indicating that a corresponding target process currently calls the plurality of objective functions; and separately performing a hot patching operation on the M target processes based on the initial call information, the current call information corresponding to each of the target processes, and the patch file.

In this embodiment of the present invention, a plurality of target processes (namely, processes that need to be patched) that call vulnerability functions are first determined, and information (namely, the initial call information) indicating that each target process calls an objective function (for example, a vulnerability function) is recorded. Then, information (which may also be understood as information indicating that a current vulnerability function is called) indicating that each target process currently calls a vulnerability function is obtained. Further, a vulnerability function that can be currently patched may be determined based on the information indicating that a current vulnerability function is called. Finally, a target process that can be currently patched is determined based on the initial call information of the plurality of target processes, and a patching operation is performed on the target process based on the patch file, so that vulnerability repairing can be performed on a software library running on a server without restarting a process, thereby resolving a loss of service suspension caused by restarting the server or an application. In a conventional technology, when none of the target processes call a vulnerability function, patching is performed on all target processes (or threads) at a time, resulting in low patching efficiency. However, in this application, because all target processes that need to be patched and the information (namely, the initial call information) indicating that each target process calls a vulnerability function are recorded in advance, after the vulnerability function that can be currently patched is determined, the target process that can be currently patched may be determined from the plurality of target processes based on the initial call information. In this way, patching can be flexibly performed according to a priority or a strategy, thereby improving hot patching efficiency.

In a possible implementation, the patch file includes repair information of each of the plurality of objective functions, and the determining a patch file generated for a plurality of objective functions includes: comparing original code of a plurality of functions with repair code of the plurality of functions, and determining the plurality of objective functions from the plurality of functions; and determining the repair information of each of the plurality of objective functions based on the repair code.

In this embodiment of the present invention, an application service may be run on an electronic device, and a plurality of functions may be called in the application service. During running of the application service, if one or more functions have vulnerabilities, a patching operation needs to be performed on the function with vulnerabilities. Before a patching operation is performed, the electronic device may first determine, based on original code and repair code (which may be understood as code modified by a programmer for a vulnerability) of the application service, a function with vulnerabilities in the application service. Then, a patch file for all vulnerability functions can be obtained based on the repair code. In this way, a patching operation can be performed on the vulnerability function based on the patch file, thereby improving system security.

In a possible implementation, the comparing original code of a plurality of functions with repair code of the plurality of functions, and determining the plurality of objective functions from the plurality of functions includes: separately running the original code and the repair code, and obtaining first intermediate information of the original code and second intermediate information of the repair code by modifying a compiler parameter; and determining the plurality of objective functions from the plurality of functions based on the first intermediate information and the second intermediate information.

In this embodiment of the present invention, a compiler of the electronic device may separately run the original code and the repair code of the application service, and then separately obtain an intermediate file of the original code and an intermediate file of the repair code by hijacking a GCC compiler. Further, the objective function (for example, the vulnerability function) may be determined by comparing the intermediate file of the original code with the intermediate file of the repair code. In this application, a complex procedure is invisible to a user (a construction system), and a user-mode standard patch file can be generated in a one-click mode, and intermediate information of the original code and the repair code can be obtained without calling a CC variable. This avoids a problem that an application scenario is limited because the compiler is indirectly called by changing a CC variable for constructing a project to obtain intermediate files of the original code and the repair code, thereby reducing debugging overheads and having a wider application scope.

In a possible implementation, the method further includes: the determining M target processes from N processes based on the plurality of objective functions includes: determining whether each of the N processes calls at least one of the plurality of objective functions, where the N processes include one or more of a running process, a newly pulled process, and a to-be-pulled process; and determining a corresponding process as the target process if at least one of the plurality of obj ective functions is called.

In this embodiment of the present invention, it may be first determined whether a process that calls the objective function (for example, the vulnerability function) exists in the running process, the newly pulled process, and the to-be-pulled process. If the process that calls the objective function exists, a corresponding process is determined as the target process, to record in advance all target processes that need to be patched and the information indicating that each target process calls a vulnerability function. After the vulnerability function that can be currently patched is determined, the target process that can be currently patched may be determined from the plurality of target processes based on the initial call information. In this way, patching can be flexibly performed according to a priority or a strategy, thereby improving hot patching efficiency.

In a possible implementation, the recording initial call information of the M target processes includes: replacing a memory page corresponding to each of the M target processes with a software interrupt instruction, where the software interrupt instruction is used to suspend running of a corresponding target process; and obtaining the initial call information of the M target processes.

In this embodiment of the present invention, after a plurality of target processes that subsequently need to be patched are determined, a memory page corresponding to the target process may be replaced with a software interrupt instruction, to suspend running of the target process. In this way, the initial call information of the target process may be obtained, and all target processes that need to be patched and the information indicating that each target process calls a vulnerability function are recorded in advance. After the vulnerability function that can be currently patched is determined, the target process that can be currently patched may be determined from the plurality of target processes based on the initial call information. In this way, patching can be flexibly performed according to a priority or a strategy, thereby improving hot patching efficiency.

In a possible implementation, the determining current call information corresponding to each of the M target processes includes: recording information indicating that each of the M target processes currently calls the plurality of objective functions, and updating the corresponding current call information.

In a conventional technology, current function call information of a target process (or thread) can be obtained only after all threads (or processes) are suspended, resulting in reduced service performance efficiency. However, in this embodiment of the present invention, each time the target process calls the vulnerability function, the target process records the vulnerability function in corresponding current call information. Therefore, the information indicating that the target process currently calls the vulnerability function can be obtained without suspending all threads or processes, thereby improving hot patching efficiency and maintaining memory consistency of the processes.

In a possible implementation, the separately performing a hot patching operation on the M target processes based on the initial call information, the current call information corresponding to each of the target processes, and the patch file includes: performing, according to a hot patch strategy and based on the initial call information, the current call information corresponding to each of the target processes, and the repair information of each of the plurality of objective functions, a hot patching operation on a target process that is of the M target processes and that meets the hot patch strategy.

In this embodiment of the present invention, the hot patch strategy may be a user-defined strategy, and the hot patch strategy may be divided into a plurality of dimensions. For example, in a function dimension, when a vulnerability function is not called by all processes/threads, that is, when a value corresponding to the vulnerability function (funcx) is 0, patching may be started; in a thread dimension, when func1, func2, and func3 are not called by thread_x, that is, when a value corresponding to thread_x is reduced to 0, patching may be started; and in a full dimension, if all vulnerability functions are not called by all threads, that is, values corresponding to all vulnerability functions are reduced to 0, patching may be started. Further, when to start patching may be determined according to the hot patch strategy, the initial call information of the plurality of target processes, and a situation in which each target process currently calls the vulnerability function, to implement flexible patching according to a priority or a strategy, thereby improving patching efficiency.

According to a second aspect, this application provides a hot patching apparatus. The apparatus includes: a first processing unit, configured to determine a patch file generated for a plurality of objective functions; a second processing unit, configured to determine M target processes from N processes based on the plurality of objective functions, and record initial call information of the M target processes, where the initial call information includes information indicating that each of the target processes calls the plurality of objective functions, N and M are integers greater than 0, and N is greater than or equal to M; a third processing unit, configured to determine current call information corresponding to each of the M target processes, where each piece of the current call information includes information indicating that a corresponding target process currently calls the plurality of objective functions; and a fourth processing unit, configured to separately perform a hot patching operation on the M target processes based on the initial call information, the current call information corresponding to each of the target processes, and the patch file.

In a possible implementation, the patch file includes repair information of each of the plurality of objective functions, and the first processing unit is specifically configured to: compare original code of a plurality of functions with repair code of the plurality of functions, and determine the plurality of objective functions from the plurality of functions; and determine the repair information of each of the plurality of objective functions based on the repair code.

In a possible implementation, the first processing unit is specifically configured to: separately run the original code and the repair code, and obtain first intermediate information of the original code and second intermediate information of the repair code by modifying a compiler parameter; and determine the plurality of objective functions from the plurality of functions based on the first intermediate information and the second intermediate information.

In a possible implementation, the second processing unit is specifically configured to: determine whether each of the N processes calls at least one of the plurality of objective functions, where the N processes include one or more of a running process, a newly pulled process, and a to-be-pulled process; and determine a corresponding process as the target process if at least one of the plurality of objective functions is called.

In a possible implementation, the second processing unit is specifically configured to: replace a memory page corresponding to each of the M target processes with a software interrupt instruction, where the software interrupt instruction is used to suspend running of a corresponding target process; and obtain the initial call information of the M target processes.

In a possible implementation, the third processing unit is specifically configured to: record information indicating that each of the M target processes currently calls the plurality of obj ective functions, and update the corresponding current call information.

In a possible implementation, the fourth processing unit is specifically configured to: perform, according to a hot patch strategy and based on the initial call information, the current call information corresponding to each of the target processes, and the repair information of each of the plurality of objective functions, a hot patching operation on a target process that is of the M target processes and that meets the hot patch strategy.

According to a third aspect, this application provides a computer storage medium. The computer storage medium stores a computer program, and when the computer program is executed by a processor, the method according to any implementation of the first aspect is implemented.

According to a fourth aspect, an embodiment of this application provides an electronic device. The electronic device includes a processor, and the processor is configured to support the electronic device to implement a corresponding function in the hot patching method provided in the first aspect. The electronic device may further include a memory. The memory is configured to be coupled to the processor, and the memory stores program instructions and data that are necessary for the electronic device. The electronic device may further include a communication interface, configured for communication between the electronic device and another device or a communication network.

According to a fifth aspect, this application provides a chip system. The chip system includes a processor, configured to support an electronic device to implement a function in the first aspect, for example, generating or processing information in the hot patching method. In a possible design, the chip system further includes a memory. The memory is configured to store program instructions and data that are necessary for an electronic device. The chip system may include a chip, or may include a chip and another discrete component.

According to a sixth aspect, this application provides a computer program. The computer program includes instructions, and when the computer program is executed by a computer, the computer is enabled to perform the method according to any implementation of the first aspect.

### BRIEF DESCRIPTION OF DRAWINGS

FIG. 1 is a diagram of a structure of an electronic device 100 according to an embodiment of the present invention;
FIG. 2 is a block diagram of a software structure of an electronic device 100 according to an embodiment of the present invention;
FIG. 3 is an architectural diagram of a user-mode hot patch library according to a conventional technology;
FIG. 4 is a schematic flowchart of making a patch by a user-mode hot patch library according to a conventional technology;
FIG. 5 is a diagram of preparing and applying a patch by a user-mode hot patch library according to a conventional technology;
FIG. 6 is a diagram of a system architecture of a hot patch according to an embodiment of the present invention;
FIG. 7 is a schematic flowchart of a user-mode hot patching method according to an embodiment of this application;
FIG. 8 is a schematic flowchart of making a user-mode hot patch according to an embodiment of the present invention;
FIG. 9 is a diagram of hijacking a compiler according to an embodiment of the present invention;
FIG. 10 is a diagram of user-mode injection according to an embodiment of the present invention;
FIG. 11 is a diagram of collecting statistics on initial call data according to an embodiment of the present invention;
FIG. 12 is a diagram of collecting statistics on calling according to an embodiment of the present invention;
FIG. 13 is a diagram of a user-mode hot patching process according to an embodiment of the present invention; and
FIG. 14 is a diagram of a hot patching apparatus according to an embodiment of the present invention.

### DESCRIPTION OF EMBODIMENTS

The following describes embodiments of this application with reference to the accompanying drawings in embodiments of this application.

In the specification, claims, and accompanying drawings of this application, the terms "first", "second", "third", "fourth", and the like are intended to distinguish between different objects but do not indicate a particular order. In addition, the terms "including" and "having" and any other variants thereof are intended to cover a non-exclusive inclusion. For example, a process, a method, a system, a product, or a device that includes a series of steps or units is not limited to the listed steps or units, but optionally further includes an unlisted step or unit, or optionally further includes another inherent step or unit of the process, the method, the product, or the device.

An "embodiment" mentioned in this specification indicates that a particular feature, structure, or characteristic described with reference to this embodiment may be included in at least one embodiment of this application. The phrase shown in various locations in this specification may not necessarily refer to a same embodiment, and is not an independent or optional embodiment exclusive from another embodiment. It is explicitly and implicitly understood by persons skilled in the art that embodiments described in this specification may be combined with another embodiment.

Some terms in this application are first described, to facilitate understanding of persons skilled in the art.
(1) Linux is a free and open-source UNIX-like operating system.
(2) A user-mode hot patch library (libcare) is a library that can provide real-time patches for executable files and libraries on Linux, without a need to restart an application.
(3) A trace function (ptrace) is a Linux system call and is used to trace a process. The trace function provides a capability with which a parent process can observe and control execution of a child process of the parent process, and allows the parent process to check and replace a value of a kernel image (including a register) of the child process.
(4) A compiler collection (Compiler Collection, CC) variable is defined during project construction.
(5) A system call (execve) can run another specified program and load a new program to memory space of a current process.

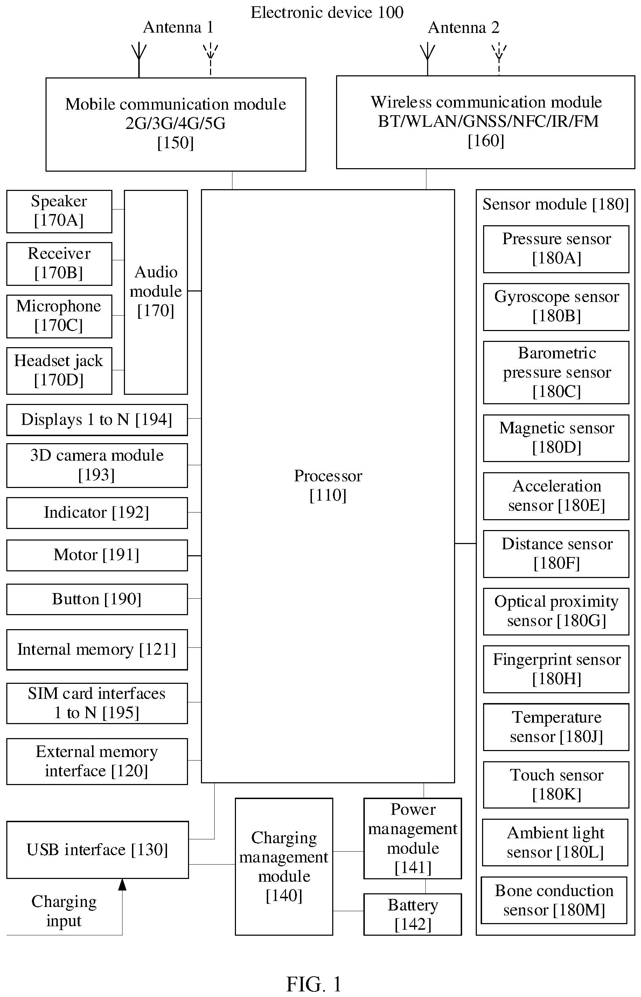

FIG. 1 is a diagram of a structure of an electronic device 100.

The electronic device 100 is used as an example below to describe embodiments in detail. It should be understood that the electronic device 100 may have more or fewer components than those shown in the figure, or may combine two or more components, or may have different component configurations. Components shown in the figure may be implemented by hardware including one or more signal processing and/or application-specific integrated circuits, software, or a combination of hardware and software.

The electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identity module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that a structure shown in this embodiment of the present invention does not constitute a specific limitation on the electronic device 100. In some other embodiments of this application, the electronic device 100 may include more or fewer components than those shown in the figure, or some components may be combined, or some components may be split, or different component arrangements may be used. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may be a nerve center and a command center of the electronic device 100. The controller may generate an operation control signal based on instruction operation code and a time sequence signal, to complete control of instruction fetching and instruction execution.

A memory may be further disposed in the processor 110, and is configured to store instructions and data. In some embodiments, the memory in the processor 110 is a cache memory. The memory may store instructions or data just used or cyclically used by the processor 110. If the processor 110 needs to use the instructions or the data again, the processor may directly call the instructions or the data from the memory. This avoids repeated access, reduces waiting time of the processor 110, and improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

It may be understood that an interface connection relationship between the modules shown in this embodiment of the present invention is merely an example for description, and does not constitute a limitation on the structure of the electronic device 100. In some other embodiments of this application, the electronic device 100 may alternatively use an interface connection manner different from that in the foregoing embodiment, or use a combination of a plurality of interface connection manners.

The charging management module 140 is configured to receive a charging input from a charger. The charger may be a wireless charger or a wired charger.

The power management module 141 is configured to connect the battery 142, the charging management module 140, and the processor 110. The power management module 141 receives an input from the battery 142 and/or the charging management module 140, to supply power to the processor 110, the internal memory 121, an external memory, the display 194, the camera 193, the wireless communication module 160, and the like.

A wireless communication function of the electronic device 100 may be implemented through the antenna 1, the antenna 2, the mobile communication module 150, the wireless communication module 160, the modem processor, the baseband processor, and the like.

The electronic device 100 may implement a display function through the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs, which execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flexible light-emitting diode, FLED), a mini-LED, a micro-LED, a micro-OLED, a quantum dot light emitting diode (quantum dot light emitting diode, QLED), or the like. In some embodiments, the electronic device 100 may include one or N displays 194, where N is a positive integer greater than 1.

The electronic device 100 may implement a photographing function by using the ISP, the camera 193, the video codec, the GPU, the display 194, the application processor, and the like.

The ISP is configured to process data fed back by the camera 193. For example, during photographing, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise, brightness, and complexion of the image. The ISP may further optimize parameters such as exposure and a color temperature of a photographing scene. In some embodiments, the ISP may be disposed in the camera 193.

The camera 193 is configured to capture a static image or a video. An optical image generated by an object through the lens is projected to the image sensor. The photosensitive element may be a charge coupled device (charge coupled device, CCD) or a complementary metal-oxide-semiconductor (complementary metal-oxide-semiconductor, CMOS) phototransistor. The light-sensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format such as RGB or YUV. In some embodiments, the electronic device 100 may include another camera. The electronic device may further include a dot matrix transmitter (which is not shown in the figure), to emit light. The camera collects light reflected by a face to obtain a face image. The processor processes and analyzes the face image, and compares the face image with stored face image information for verification.

The digital signal processor is configured to process a digital signal, and may process another digital signal in addition to the digital image signal. For example, when the electronic device 100 selects a frequency, the digital signal processor is configured to perform Fourier transformation or the like on frequency energy.

The video codec is configured to compress or decompress a digital video. The electronic device 100 may support one or more video codecs. Therefore, the electronic device 100 may play or record videos in a plurality of coding formats, for example, moving picture experts group (moving picture experts group, MPEG)-1, MPEG-2, MPEG-3, and MPEG-4.

The NPU is a neural-network (neural-network, NN) computing processor, quickly processes input information by referring to a structure of a biological neural network, for example, by referring to a transfer mode between human brain neurons, and may further continuously perform self learning. Applications such as intelligent cognition of the electronic device 100, for example, image recognition, facial recognition, speech recognition, and text understanding, may be implemented through the NPU.

The external memory interface 120 may be used to connect to an external memory card, for example, a micro SD card, to extend a storage capability of the electronic device 100. The external memory card communicates with the processor 110 through the external memory interface 120, to implement a data storage function. For example, files such as music and videos are stored in the external memory card.

The internal memory 121 may be configured to store computer-executable program code. The executable program code includes instructions. The processor 110 implements various function applications and data processing of the electronic device 100 by running the instructions stored in the internal memory 121. The internal memory 121 may include a program storage area and a data storage area. The program storage area may store an operating system, an application required by at least one function (for example, a facial recognition function, a fingerprint recognition function, and a mobile payment function), and the like. The data storage area may store data (such as facial information template data and a fingerprint information template) created during use of the electronic device 100. In addition, the internal memory 121 may include a high-speed random access memory, or may include a non-volatile memory, for example, at least one magnetic disk storage device, a flash memory device, or universal flash storage (universal flash storage, UFS).

In addition, the electronic device 100 may implement an audio function, for example, music playing and recording, by using the audio module 170, the speaker 170A, the receiver 170B, the microphone 170C, the headset jack 170D, the application processor, and the like.

The audio module 170 is configured to convert digital audio information into an analog audio signal output, and also configured to convert an analog audio input into a digital audio signal.

The speaker 170A, also referred to as a "loudspeaker", is configured to convert an audio electrical signal into a sound signal.

The receiver 170B, also referred to as an "earpiece", is configured to convert an audio electrical signal into a sound signal.

The microphone 170C, also referred to as a "mike" or a "mic", is configured to convert a sound signal into an electrical signal.

The headset jack 170D is configured to connect to a wired headset. The headset jack 170D may be the USB interface 130, or may be a 3.5 mm open mobile terminal platform (open mobile terminal platform, OMTP) standard interface, or a cellular telecommunications industry association of the USA (cellular telecommunications industry association of the USA, CTIA) standard interface.

The pressure sensor 180A is configured to sense a pressure signal, and can convert the pressure signal into an electrical signal. In some embodiments, the pressure sensor 180A may be disposed in the display 194. There are a plurality of types of pressure sensors 180A, such as a resistive pressure sensor, an inductive pressure sensor, and a capacitive pressure sensor.

The gyroscope sensor 180B may be configured to determine a motion gesture of the electronic device 100. In some embodiments, angular velocities of the electronic device 100 around three axes (namely, x, y, and z axes) may be determined by using the gyroscope sensor 180B.

The optical proximity sensor 180G may include, for example, a light-emitting diode (LED) and an optical detector, for example, a photodiode. The light emitting diode may be an infrared light-emitting diode.

The ambient light sensor 180L is configured to sense ambient light brightness. The electronic device 100 may adaptively adjust brightness of the display 194 based on the sensed ambient light brightness. The ambient light sensor 180L may also be configured to automatically adjust white balance during photographing.

The fingerprint sensor 180H is configured to collect a fingerprint. The electronic device 100 may use a feature of the collected fingerprint to implement fingerprint-based unlocking, application lock access, fingerprint-based photographing, fingerprint-based call answering, and the like. The fingerprint sensor 180H may be disposed below the touchscreen. The electronic device 100 may receive a touch operation of the user in an area corresponding to the fingerprint sensor on the touchscreen, and the electronic device 100 may collect fingerprint information of a finger of the user in response to the touch operation.

The temperature sensor 180J is configured to detect a temperature. In some embodiments, the electronic device 100 executes a temperature processing policy through the temperature detected by the temperature sensor 180J.

The touch sensor 180K is also referred to as a "touch panel". The touch sensor 180K may be disposed on the display 194, and the touch sensor 180K and the display 194 constitute a touchscreen, which is also referred to as a "touch screen". The touch sensor 180K is configured to detect a touch operation performed on or near the touch sensor. The touch sensor may transfer the detected touch operation to the application processor, to determine a type of a touch event. A visual output related to the touch operation may be provided through the display 194. In some other embodiments, the touch sensor 180K may also be disposed on a surface of the electronic device 100 at a location different from that of the display 194.

The button 190 includes a power button, a volume button, and the like. The button 190 may be a mechanical button, or may be a touch button. The electronic device 100 may receive a button input, and generate a button signal input related to user setting and function control of the electronic device 100.

The indicator 192 may be an indicator light, and may be configured to indicate a charging status and a power change, or may be configured to indicate a message, a missed call, a notification, and the like.

The SIM card interface 195 is configured to connect to a SIM card. The SIM card may be inserted into the SIM card interface 195 or removed from the SIM card interface 195, to implement contact with or separation from the electronic device 100. In some embodiments, the electronic device 100 uses an eSIM, that is, an embedded SIM card. The eSIM card may be embedded into the electronic device 100, and cannot be separated from the electronic device 100.

A software system of the electronic device 100 may use a layered architecture, an event-driven architecture, a microkernel architecture, a micro service architecture, or a cloud architecture. In this embodiment of the present invention, an Android system of a layered architecture is used as an example for describing a software structure of the electronic device 100.

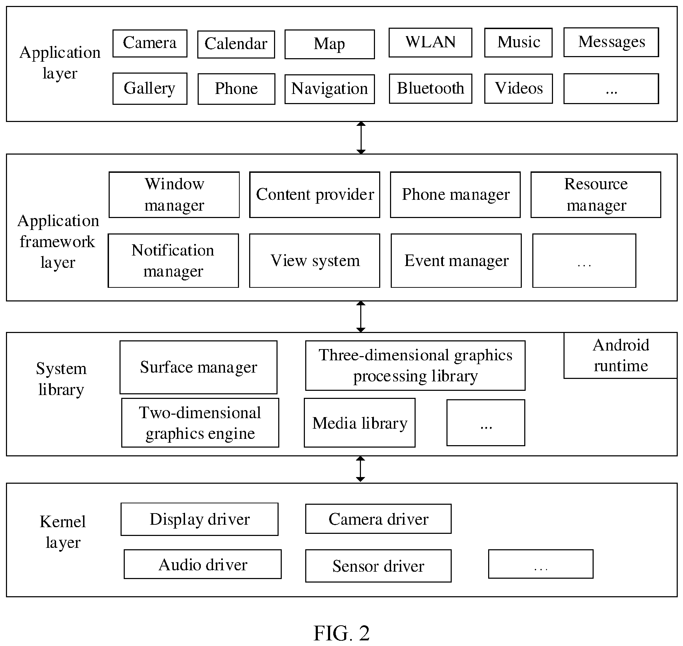

FIG. 2 is a block diagram of a software structure of an electronic device 100 according to an embodiment of the present invention.

In a layered architecture, software is divided into several layers, and each layer has a clear role and task. The layers communicate with each other through a software interface. In some embodiments, an Android system is divided into four layers: an application layer, an application framework layer, an Android runtime (Android runtime) and system library layer, and a kernel layer.

The application layer may include a series of application packages.

As shown in FIG. 2, the application packages may include applications (or referred to as applications) such as Camera, Gallery, Calendar, Phone, Map, Navigation, WLAN, Bluetooth, Music, Videos, and Messages.

The application framework layer provides an application programming interface (application programming interface, API) and a programming framework for an application at the application layer. The application framework layer includes some predefined functions.

As shown in FIG. 2, the application framework layer may include a window manager, a content provider, a view system, a phone manager, a resource manager, a notification manager, and the like.

The window manager is used to manage a window program. The window manager may obtain a size of the display, determine whether there is a status bar, perform screen locking, take a screenshot, and the like.

The content provider is used to store and obtain data, and enables these data to be accessible to an application. The data may include a video, an image, an audio, calls that are made and answered, a browsing history and bookmarks, an address book, and the like.

The view system includes visual controls, such as a control for displaying text and a control for displaying a picture. The view system may be used to construct an application. A display interface may include one or more views. For example, a display interface including an SMS message notification icon may include a view for displaying text and a view for displaying a picture.

The phone manager is configured to provide a communication function for the electronic device 100, for example, management of a call status (including answering, declining, or the like).

The resource manager provides an application with various resources, such as a localized character string, an icon, a picture, a layout file, and a video file.

The notification manager enables an application to display notification information in a status bar, and may be used to convey a notification-type message. The displayed notification information may automatically disappear after a short pause without user interaction. For example, the notification manager is used to notify download completion, provide a message notification, and the like. The notification manager may alternatively be a notification that appears in a top status bar of the system in a form of a chart or scroll bar text, for example, a notification of an application running in the background, or a notification that appears on a screen in a form of a dialog interface. For example, text information is displayed in the status bar, an announcement is given, the electronic device vibrates, or the indicator light blinks.

The Android runtime includes a kernel library and a virtual machine. The Android runtime is responsible for scheduling and management of the Android system.

The kernel library includes two parts: a performance function that needs to be called in a Java language and a kernel library of Android.

The application layer and the application framework layer run on the virtual machine. The virtual machine executes Java files at the application layer and the application framework layer as binary files. The virtual machine is used to perform functions such as object lifecycle management, stack management, thread management, security and exception management, and garbage collection.

The system library may include a plurality of functional modules, for example, a surface manager (surface manager), a media library (Media Libraries), a three-dimensional graphics processing library (for example, an OpenGL ES), and a 2D graphics engine (for example, an SGL).

The surface manager is used to manage a display subsystem and provide fusion of 2D and 3D layers for a plurality of applications.

The media library supports playback and recording in a plurality of commonly used audio and video formats, and static image files. The media library may support a plurality of audio and video encoding formats, for example, MPEG-4, H.264, MP3, AAC, AMR, JPG, and PNG.

The three-dimensional graphics processing library is used to implement three-dimensional graphics drawing, image rendering, composition, layer processing, and the like.

The 2D graphics engine is a drawing engine for 2D drawing.

The kernel layer is a layer between hardware and software. The kernel layer includes at least a display driver, a camera driver, an audio driver, and a sensor driver.

Next, a technical problem to be specifically resolved in this application is proposed. In a conventional technology, a user-mode hot patch technology is as follows.

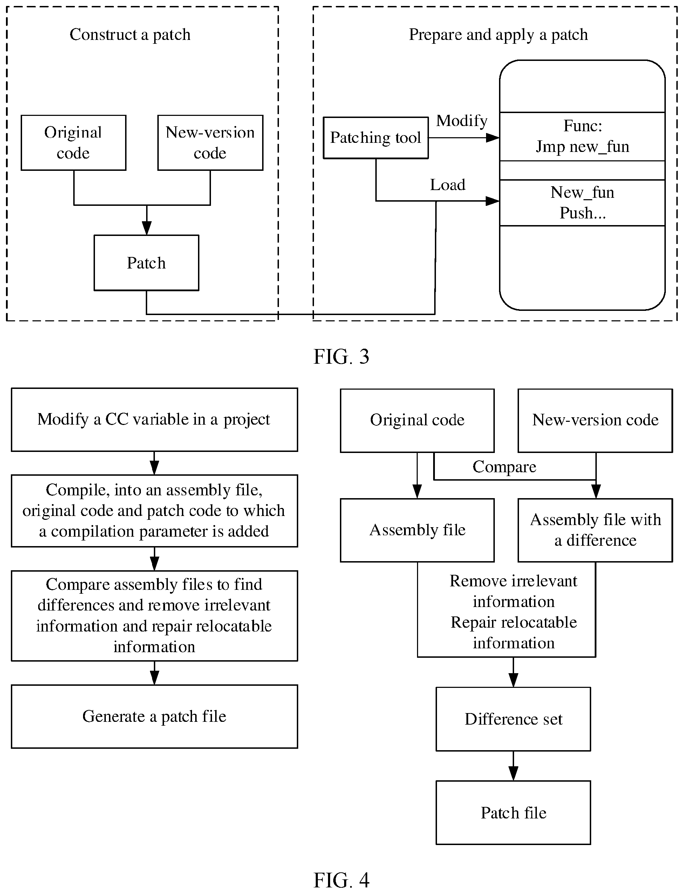

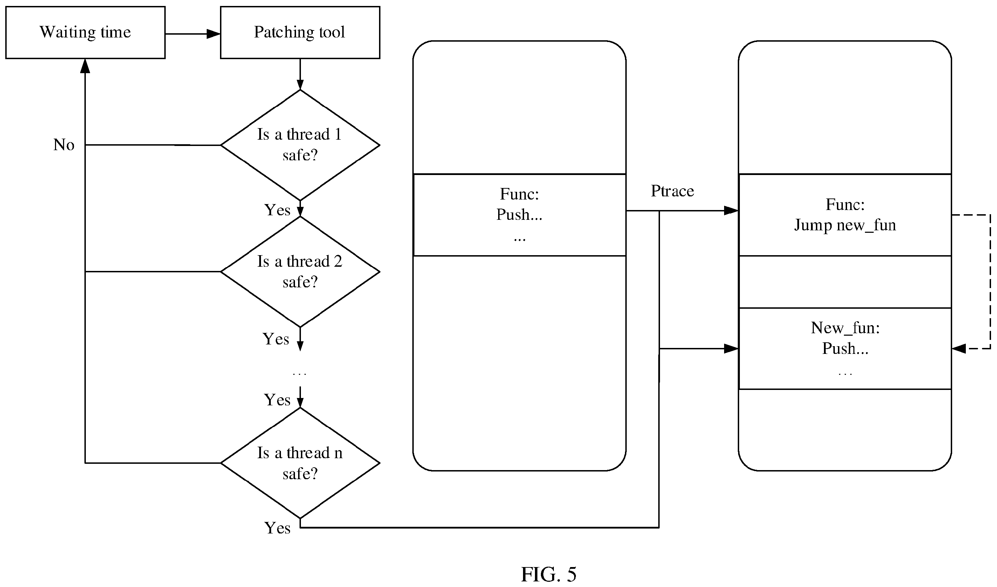

In a conventional technology, libcare may perform, by using ptrace and proc files, a hot patching operation on a target process running on a Linux system, without restarting a process. FIG. 3 is a diagram of an architecture of a user-mode hot patch library according to a conventional technology. In the figure, libcare generates a patch file by comparing assembly files generated during construction of original code and new-version code; libcare identifies a process and loads a patch in a manner similar to loading a shared object (library) to a target process memory; and libcare changes an instruction for the target process and redirects the target process to the patch. Next, FIG. 4 is a schematic flowchart of making a patch by a user-mode hot patch library according to a conventional technology. In the figure, a user-mode hot patch of libcare is made mainly by changing a compiled CC variable (a program set by libcare is redirected to when a project calls a compiler collection variable). By doing this, a compiler can be called again in a libcare program, and a compilation parameter that does not exist originally may be added on this basis; and in addition, an output location of a compiled intermediate file can be obtained in such a manner. Then, libcare generates a patch file by comparing intermediate files (assembly files) of source code and patch code. Further, FIG. 5 is a diagram of preparing and applying a patch by a user-mode hot patch library according to a conventional technology. In the figure, after the user-mode hot patch is made, libcare traverses /proc/ folders to find a process that needs to be patched from all processes. To maintain memory consistency, libcare does not stop the process through ptrace until no symbol information of a patch exists in a stack of each thread in the process, and performs code injection to modify an entry of an objective function to redirect to the location of the patch function.

According to this solution, vulnerability repairing can be performed on a software library running on a server, without restarting an electronic device (for example, the server). However, the solution has the following disadvantages.

Disadvantage 1: Libcare indirectly calls a compiler to generate assembly files by changing a compiler collection variable (CC variable) for constructing a project. However, this method is not applicable to some scenarios. For example, some projects requiring cross-compilation also need to use compiler collection variables, which conflicts with patch construction. For another example, some projects may not use compiler collection variables, and then patch construction cannot be performed.

Disadvantage 2: During patch preparation, libcare obtains the target process by traversing the /proc/ folders in a target process identification phase. As a result, many non-target processes are scanned, which is time-consuming if there are too many processes.

Disadvantage 3: To maintain memory consistency of processes, it needs to be ensured that each thread runs in a secure location (no symbol information of a patch in the stack). Libcare traverses all threads in sequence until all the threads are in a secure location. Then, libcare injects the redirection instruction into the process. As a result, some threads cannot be configured by libcare for patching.

To sum up, to resolve the problems in the conventional technology, three key problems need to be resolved to achieve the objective of user-mode patching.

Problem 1: Libcare calls the CC variable to obtain intermediate files during patching. Such a method conflicts with cross compilation, which has great limitations. Some projects do not read the CC variable. Therefore, how to make a hot patch file without calling the CC variable is an urgent problem to be resolved.

Problem 2: All the threads need to be suspended each time when the function calling is checked. The thread is not patched until none of the damaged functions are called, which causes great performance loss. Therefore, how to reduce a quantity of pauses of a check process is an urgent problem to be resolved.

Problem 3: Libcare can patch only one process at a time, which is inefficient. Therefore, how to improve patching efficiency is an urgent problem to be resolved.

The hot patching method provided in this application may be used to resolve the foregoing technical problems.

The following describes embodiments of this application with reference to the accompanying drawings.

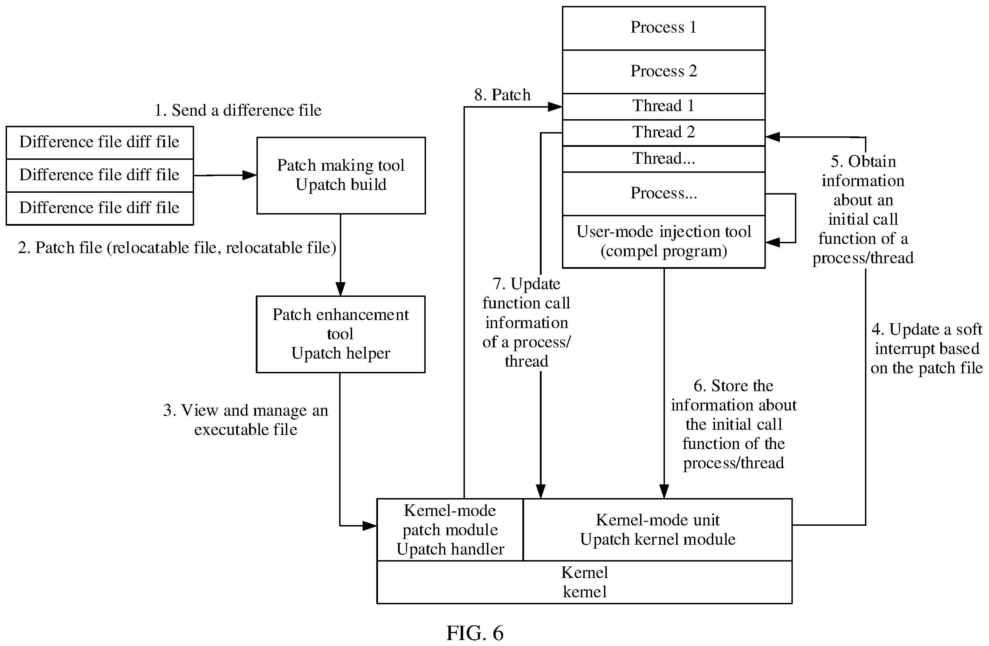

Based on the technical problems proposed above, for ease of understanding of embodiments of the present invention, the following first describes a system architecture on which embodiments of the present invention are based. FIG. 6 is a diagram of a system architecture of a hot patch according to an embodiment of the present invention. The system may run in a software system of the foregoing electronic device 100, and may be used to repair a vulnerability in a software library without restarting a process, to avoid a loss of service suspension caused by restarting the electronic device (for example, the server) or an application. The system architecture may include a patch making tool (upatch build), a patch enhancement tool (upatch helper), a user-mode injection tool (compel program), and a kernel-mode patch module (upatch handler). The patch making tool may generate a user-mode patch file by performing operations such as hijacking a GCC compiler, comparing difference functions (such as vulnerability functions), and processing an intermediate file. How the patch making tool makes the user-mode patch file is described in detail in the following, and details are not described herein. The patch enhancement tool can be used to query whether a patch is made for an executable file (which may be a patch file of a binary file), query a version of the patch made for the executable file, and query a correspondence between the patch and the executable file. The user-mode injection tool may be used to obtain an initial stack call status of a process/thread (namely, a target process/thread) of a vulnerability function, that is, may obtain information about an initial call function of each process/thread, and may store the obtained information in a kernel-mode unit (namely, a memory). How the user-mode injection tool obtains the information about the initial call function of the target process/thread is described in detail in the following, and details are not described herein. The kernel-mode patch module may be used to update function call data of a process/thread in real time and patch a user-mode process/thread. Details are described in the following, and details are not described herein.

It may be understood that the system architecture of the hot patch in FIG. 6 is merely an example implementation in embodiments of this application, and the system architecture of the hot patch in embodiments of this application includes but is not limited to the foregoing system architecture.

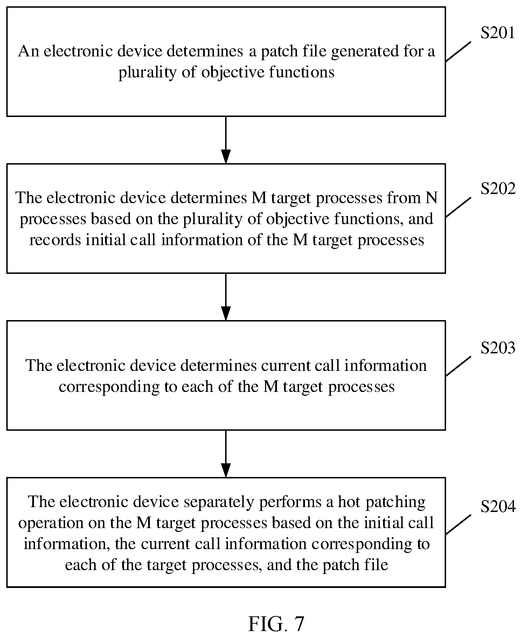

FIG. 7 is a schematic flowchart of a user-mode hot patching method according to an embodiment of this application. The following describes the hot patching method in embodiments of this application with reference to FIG. 7 and based on the electronic device 100 in FIG. 1. It should be noted that, to describe the hot patching method in embodiments of this application in more detail, an entity for executing each procedure step of this application is the electronic device 100. However, this does not mean that in embodiments of this application, a corresponding method procedure can only be performed by the described entity.

Step S201: The electronic device determines a patch file generated for a plurality of objective functions.

Specifically, the patch file includes repair information of each of the plurality of objective functions. The plurality of objective functions may include but are not limited to one or more of a function with vulnerabilities, a function to which content needs to be added, or a function from which content needs to be deleted. The patch file may be understood as an executable program for repairing vulnerabilities of the plurality of objective functions, and includes repair information of each objective function. The repair information of each objective function may be understood as an executable program for repairing a corresponding objective function.

In a possible implementation, that the electronic device 100 determines a patch file generated for a plurality of objective functions includes: The electronic device 100 compares original code of a plurality of functions with repair code of the plurality of functions, and determines the plurality of objective functions from the plurality of functions; and determines the repair information of each of the plurality of objective functions based on the repair code.

Specifically, an application service may be run on the electronic device 100, and the plurality of functions may be called in the application service. During running of the application service, if one or more functions have vulnerabilities, a patching operation needs to be performed on the function with vulnerabilities. Before a patching operation is performed, the electronic device 100 may first determine, based on original code and repair code (which may be understood as code modified by a programmer for a vulnerability) of the application service, a function with vulnerabilities in the application service. Then, a patch file for all vulnerability functions can be obtained based on the repair code. In this way, a patching operation can be performed on the vulnerability function based on the patch file, thereby improving system security.

In a possible implementation, that the electronic device 100 compares original code of a plurality of functions with repair code of the plurality of functions, and determines the plurality of objective functions from the plurality of functions includes: The electronic device 100 separately runs the original code and the repair code, and obtains first intermediate information of the original code and second intermediate information of the repair code by modifying a compiler parameter; and determines the plurality of obj ective functions from the plurality of functions based on the first intermediate information and the second intermediate information.

Specifically, the first intermediate information may include but is not limited to data and a result that are generated in a running process of the original code; and the second intermediate information may include but is not limited to data and a result that are generated in a running process of the repair code. A compiler (GNU Compiler Collection, GCC) of the electronic device 100 may separately run the original code and the repair code of the application service, and then separately obtain an intermediate file of the original code and an intermediate file of the repair code by hijacking the GCC compiler. Further, the patch making tool may determine the vulnerability function by comparing the intermediate file of the original code with the intermediate file of the repair code. In this application, a complex procedure is invisible to a user (a construction system), and a user-mode standard patch file can be generated in a one-click mode, and intermediate information of the original code and the repair code can be obtained without calling a CC variable. This avoids a problem that an application scenario is limited because the compiler is indirectly called by changing a CC variable for constructing a project to obtain intermediate files of the original code and the repair code, thereby reducing debugging overheads and having a wider application scope.

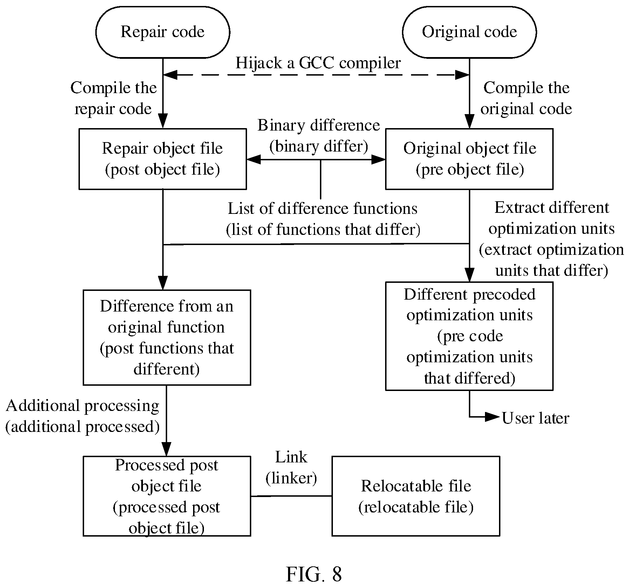

For example, FIG. 8 is a schematic flowchart of making a user-mode hot patch according to an embodiment of the present invention. In the figure, the electronic device 100 may separately run the repair code and the original code, then check an environment variable (repair code compilation or original code compilation) by hijacking an execution entry of a compiler (for example, the GCC compiler), and determine a phase of making a patch; apply for new memory space, arrange a new parameter set, modify a GCC original stack, and re-execute a system call (namely, an execve call); compile and generate an original object file (pre object), a repair object file (post object), and a related intermediate file, where the original object file may be obtained by obtaining source code corresponding to a running user-mode process and compiling the source code into a binary file, and the repair object file is obtained by compiling modified source code (without errors) again; further compare the pre object file with the post object file to obtain a difference function and related data; and generate a user-mode hot patch in a binary format (Executable and Linkable Format, ELF) by processing the difference function, the related data, and meta information.

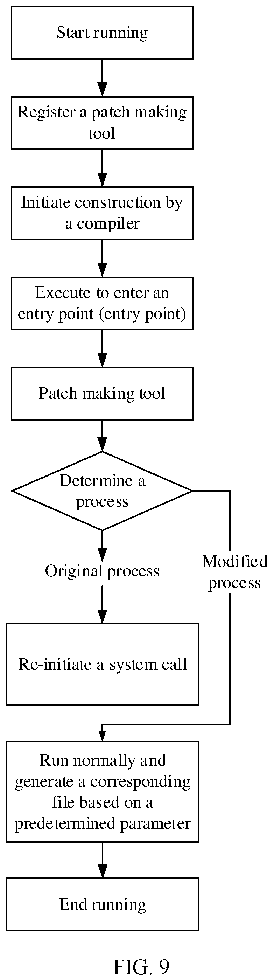

It should be noted that FIG. 9 is a diagram of hijacking a compiler according to an embodiment of the present invention. In the figure, when running is started, a patch making tool may be first registered; a compiler initiates construction and executes to enter an entry point; determines whether a process is an original process, and if the process is the original process, re-initiates a system call on the original process; or if the process is not the original process, runs normally on a modified process, and generates a corresponding file based on a predetermined parameter; and finally, the running ends.

Step S202: The electronic device determines M target processes from N processes based on the plurality of objective functions, and records initial call information of the M target processes.

Specifically, the N processes include one or more of a running process, a newly pulled process, and a to-be-pulled process. The initial call information includes information indicating that each of the target processes calls the plurality of objective functions, each of the target processes is a process that calls one or more of the plurality of objective functions, N and M are integers greater than 0, and N is greater than or equal to M.

In this application, a plurality of target processes (namely, processes that need to be patched) that call vulnerability functions are first determined, and information (namely, the initial call information) indicating that each target process calls an objective function (for example, a vulnerability function) is recorded. Then, information (which may also be understood as information indicating that a current vulnerability function is called) indicating that each target process currently calls a vulnerability function is obtained. Further, a vulnerability function that can be currently patched may be determined based on the information indicating that a current vulnerability function is called. Finally, a target process that can be currently patched is determined based on the initial call information of the plurality of target processes, and a patching operation is performed on the target process based on the patch file, so that vulnerability repairing can be performed on a software library running on a server without restarting a process, thereby resolving a loss of service suspension caused by restarting the server or an application. In a conventional technology, when none of the target processes call a vulnerability function, patching is performed on all target processes (or threads) at a time, resulting in low patching efficiency. However, in this application, because all target processes that need to be patched and the information (namely, the initial call information) indicating that each target process calls a vulnerability function are recorded in advance, after the vulnerability function that can be currently patched is determined, the target process that can be currently patched may be determined from the plurality of target processes based on the initial call information. In this way, patching can be flexibly performed according to a priority or a strategy, thereby improving hot patching efficiency.

In a possible implementation, determining the M target processes from the N processes based on the plurality of objective functions includes: determining whether each of the N processes calls at least one of the plurality of obj ective functions, where the N processes include one or more of a running process, a newly pulled process, and a to-be-pulled process; and determining a corresponding process as the target process if at least one of the plurality of objective functions is called.

Specifically, it may be first determined whether a process that calls the vulnerability function exists in the running process, the newly pulled process, and the to-be-pulled process. If the process that calls the vulnerability function exists, a corresponding process is determined as the target process, to record in advance all target processes that need to be patched and the information indicating that each target process calls a vulnerability function. After the vulnerability function that can be currently patched is determined, the target process that can be currently patched may be determined from the plurality of target processes based on the initial call information. In this way, patching can be flexibly performed according to a priority or a strategy, thereby improving hot patching efficiency.

In a possible implementation, recording the initial call information of the M target processes includes: replacing a memory page corresponding to each of the M target processes with a software interrupt instruction, where the software interrupt instruction is used to suspend running of a corresponding target process; and obtaining the initial call information of the M target processes.

Specifically, the memory page may be used to store an executable program of a process. The software interrupt instruction may be understood as that processing is completed by a software interrupt when an event cannot be processed in a short time. That is, running of a process may be suspended by using the software interrupt instruction. After a plurality of target processes that subsequently need to be patched are determined by analyzing and identifying the running process, the newly pulled process, and the to-be-pulled process, a memory page corresponding to the target process may be replaced with a software interrupt instruction, to suspend running of the target process. In this way, the initial call information of the target process may be obtained, and all target processes that need to be patched and the information indicating that each target process calls a vulnerability function are recorded in advance. After the vulnerability function that can be currently patched is determined, the target process that can be currently patched may be determined from the plurality of target processes based on the initial call information. In this way, patching can be flexibly performed according to a priority or a strategy, thereby improving hot patching efficiency.

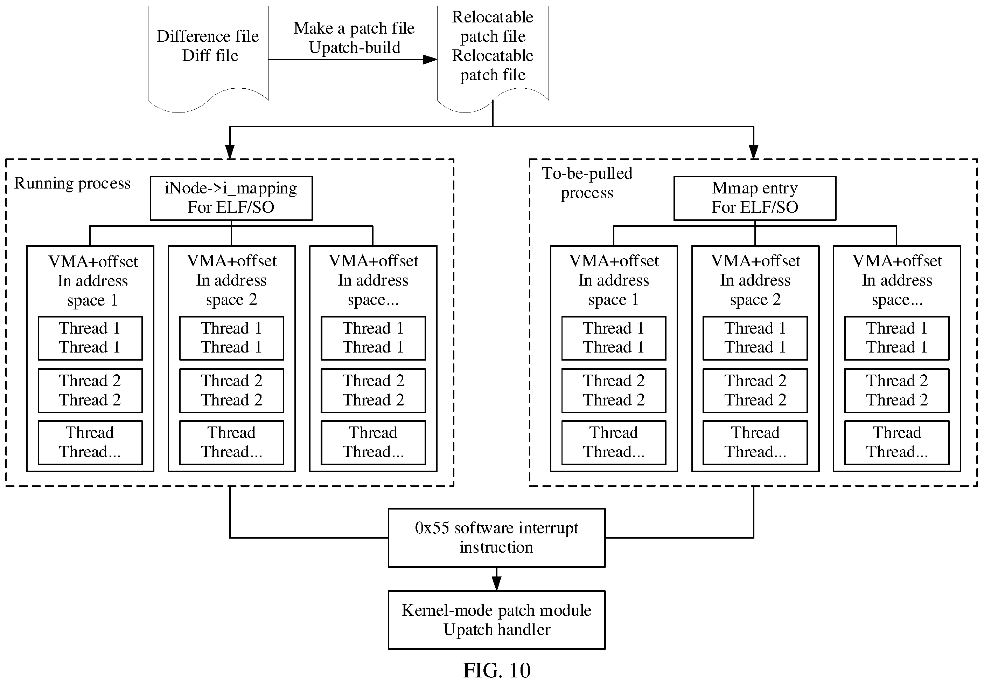

For example, FIG. 10 is a diagram of user-mode injection according to an embodiment of the present invention. In the figure, for the running process, a virtual memory area (virtual memory area, vma) in address mapping space of the running process may be first found; and after vma information is read, a corresponding memory page is found and is replaced with a software interrupt instruction. It should be noted that each file in a kernel has an index node inode corresponding to the file in a file system (the inode is a data structure in a UNIX operating system, and includes some important information related to each file in the file system), the inode has an attribute memory address (i_maping), and i_mapping stores address space mapping information vma. For the newly pulled process or the to-be-pulled process, all mmap calling entries check whether the file is a target binary file (a binary file that needs to be patched); the vma in the address mapping space of the running process is searched for; after the vma information is read, a corresponding memory page is found and is replaced with a software interrupt instruction; and then an uprobe handler is triggered, and a kernel-mode module performs related processing.

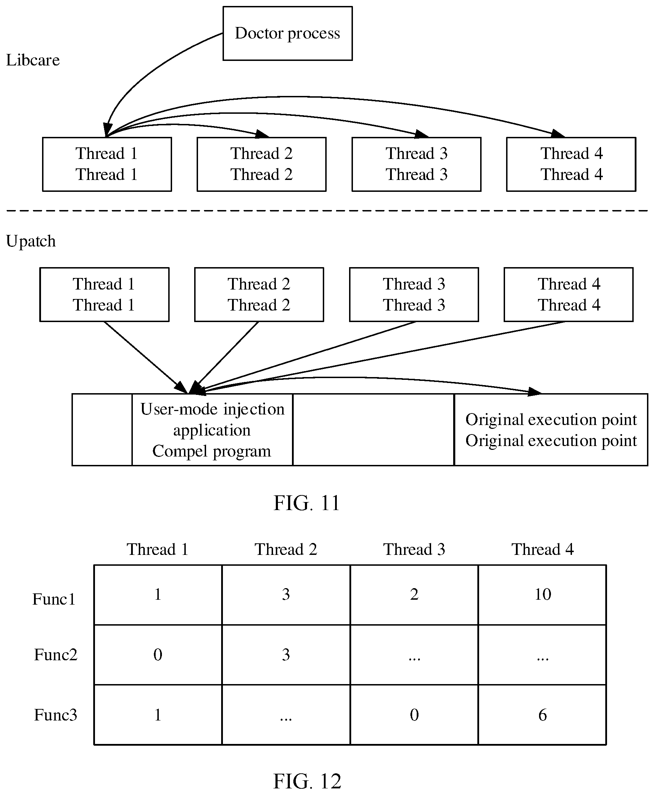

For another example, FIG. 11 is a diagram of collecting statistics on initial call data according to an embodiment of the present invention. In the figure, a memory may be first applied for, to store a compel program, and a call statistical value of a function (a function that needs to be patched) of a thread is collected in the compel program; all threads in the process are stopped; call contexts (such as a program counter and a stack pointer register) of all threads may be recorded at the same time, and the call contexts of the threads are modified to execute the compel program; statistics on calling of vulnerability functions by all threads are collected, and the call information is transferred to a kernel hot patch module, where the information is used in subsequent patching; the memory that stores the compel program is deleted; and all threads of the process are restored, and the process runs normally.

It should be noted that this operation is performed only once, and the process is stopped only once. After statistics on process/thread information are collected, related memory space may be deleted.

Step S203: The electronic device determines current call information corresponding to each of the M target processes.

Specifically, each piece of the current call information includes information indicating that a corresponding target process currently calls the plurality of objective functions.

In a possible implementation, determining the current call information corresponding to each of the M target processes includes: recording information indicating that each of the M target processes currently calls the plurality of objective functions, and updating the corresponding current call information.

Specifically, each time the target process calls the vulnerability function, the target process records the vulnerability function in corresponding current call information, and information indicating that the target process currently calls the vulnerability function can be obtained without suspending all threads or processes. In this way, a vulnerability function that is currently not called is determined as a vulnerability function that can be currently patched in subsequent patching, thereby improving hot patching efficiency and maintaining memory consistency of the processes.

For example, FIG. 12 is a diagram of collecting statistics on calling according to an embodiment of the present invention. In the figure, when a target process calls a function, an entry and an exit of a vulnerability function may be hijacked, to update call statistics in real time. For example, when a thread 1 calls func1, a count is increased by 1, and after calling is completed, the count is decreased by 1.

Step S204: The electronic device separately performs a hot patching operation on the M target processes based on the initial call information, the current call information corresponding to each of the target processes, and the patch file.

Specifically, a plurality of target processes (namely, processes that need to be patched) that call vulnerability functions may be first determined, and information (namely, the initial call information) indicating that each target process calls an objective function (for example, a vulnerability function) may be recorded. Then, information (which may also be understood as information indicating that a current vulnerability function is called) indicating that each target process currently calls a vulnerability function is obtained. Further, a vulnerability function that can be currently patched may be determined based on the information indicating that a current vulnerability function is called. Finally, a target process that can be currently patched is determined based on the initial call information of the plurality of target processes, and a patching operation is performed on the target process based on the patch file, so that vulnerability repairing can be performed on a software library running on a server without restarting a process, thereby resolving a loss of service suspension caused by restarting the server or an application.

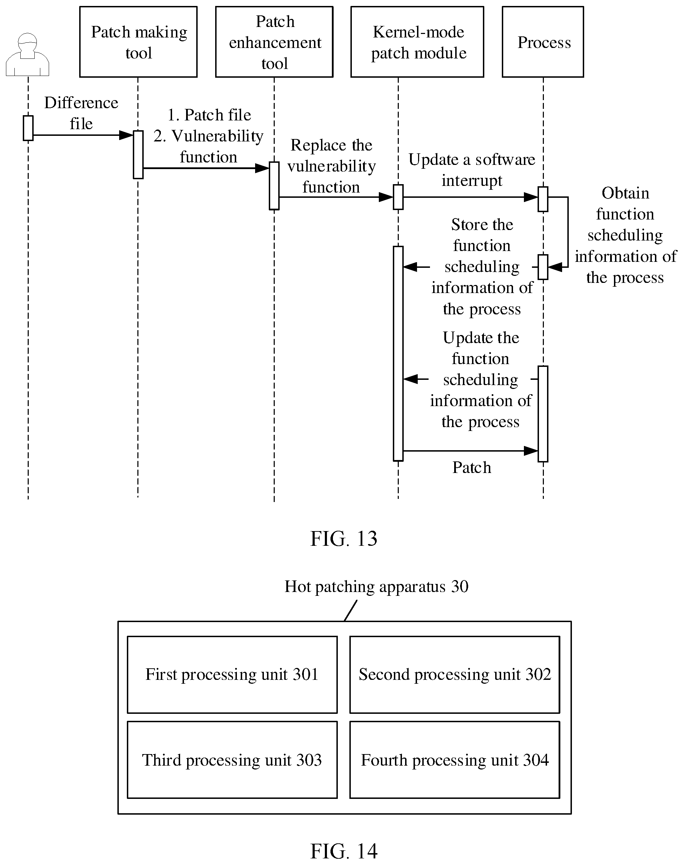

For example, FIG. 13 is a diagram of a user-mode hot patching process according to an embodiment of the present invention. In the figure, a patch file is generated based on a user-mode difference file and by using a user-mode patching tool; after the patch file is generated by a user mode, the patch enhancement tool (upatch helper) is used to send a correspondence between the vulnerability function and the binary file (repair information) to the kernel-mode module; whether the process calls the vulnerability function is identified, and if the process calls the vulnerability function, a kernel module is triggered to replace a corresponding memory page with a software interrupt instruction; the user-mode injection tool is used to collect statistics on the initial call information of the process function; the statistical data is stored in the kernel module; the kernel module detects process call information in real time, and updates, in real time, call information indicating that a thread calls the vulnerability function; according to a configuration strategy, when a count of calls of a corresponding vulnerability function is detected to be 0, a new function address is redirected to; and a user-mode problem is fixed, and a hot patching procedure ends.

In a possible implementation, separately performing the hot patching operation on the M target processes based on the initial call information, the current call information corresponding to each of the target processes, and the patch file includes: performing, according to a hot patch strategy and based on the initial call information, the current call information corresponding to each of the target processes, and the repair information of each of the plurality of objective functions, a hot patching operation on a target process that is of the M target processes and that meets the hot patch strategy.

Specifically, the hot patch strategy may be a user-defined strategy, and the hot patch strategy may be divided into a plurality of dimensions. For example, in a function dimension, when a vulnerability function is not called by all processes/threads, that is, when a value corresponding to the vulnerability function (funcx) is 0, patching may be started; in a thread dimension, when func1, func2, and func3 are not called by threadx, that is, when a value corresponding to threadx is reduced to 0, patching may be started; and in a full dimension, if all vulnerability functions are not called by all threads, that is, values corresponding to all vulnerability functions are reduced to 0, patching may be started. Further, when to start patching may be determined according to the hot patch strategy and a situation in which each target process currently calls the vulnerability function, to implement flexible patching according to a priority or a strategy, thereby improving patching efficiency. For example, a target process that meets a patch strategy may be determined based on a situation in which each target process currently calls the vulnerability function and the hot patch strategy, and a place that calls a damaged function points to an address of a repaired function. For example, when a thread 1 does not call func1, func2, or func3, func1, func2, or func3 may be patched. When the thread 1 calls func1, func2, or func3 herein, the repaired function may be directly called, that is, the call statistical value is monitored according to the strategy, and when the statistical value meets the configuration strategy, address space corresponding to the repaired function is redirected to, so that vulnerability repairing can be performed on a software library running on a server without restarting a process, thereby resolving a loss of service suspension caused by restarting the server or an application.

It should be noted that, if no proper moment is found (a corresponding value is decreased to 0), an error is reported after a preset time (for example, w seconds), that is, no proper time is found for patching. Further, after a pause of x seconds, a proper time may continue to be found for patching.

The methods in embodiments of the present invention are described in detail above, and a related apparatus in embodiments of the present invention is provided below.

FIG. 14 is a diagram of a hot patching apparatus according to an embodiment of the present invention. The hot patching apparatus 30 may include a first processing unit 301, a second processing unit 302, a third processing unit 303, and a fourth processing unit 304. Detailed descriptions of the modules are as follows.

The first processing unit 301 is configured to determine a patch file generated for a plurality of objective functions.

The second processing unit 302 is configured to determine M target processes from N processes based on the plurality of objective functions, and record initial call information of the M target processes. The initial call information includes information indicating that each of the target processes calls the plurality of objective functions, N and M are integers greater than 0, and N is greater than or equal to M.

The third processing unit 303 is configured to determine current call information corresponding to each of the M target processes. Each piece of the current call information includes information indicating that a corresponding target process currently calls the plurality of objective functions.

The fourth processing unit 304 is configured to separately perform a hot patching operation on the M target processes based on the initial call information, the current call information corresponding to each of the target processes, and the patch file.

In a possible implementation, the patch file includes repair information of each of the plurality of objective functions, and the first processing unit 301 is specifically configured to: compare original code of a plurality of functions with repair code of the plurality of functions, and determine the plurality of objective functions from the plurality of functions; and determine the repair information of each of the plurality of objective functions based on the repair code.

In a possible implementation, the first processing unit 301 is specifically configured to: separately run the original code and the repair code, and obtain first intermediate information of the original code and second intermediate information of the repair code by modifying a compiler parameter; and determine the plurality of objective functions from the plurality of functions based on the first intermediate information and the second intermediate information.

In a possible implementation, the second processing unit 302 is specifically configured to: determine whether each of the N processes calls at least one of the plurality of objective functions, where the N processes include one or more of a running process, a newly pulled process, and a to-be-pulled process; and determine a corresponding process as the target process if at least one of the plurality of objective functions is called.

In a possible implementation, the second processing unit 302 is specifically configured to: replace a memory page corresponding to each of the M target processes with a software interrupt instruction, where the software interrupt instruction is used to suspend running of a corresponding target process; and obtain the initial call information of the M target processes.

In a possible implementation, the third processing unit 303 is specifically configured to: record information indicating that each of the M target processes currently calls the plurality of objective functions, and update the corresponding current call information.

In a possible implementation, the fourth processing unit 304 is specifically configured to: perform, according to a hot patch strategy and based on the initial call information, the current call information corresponding to each of the target processes, and the repair information of each of the plurality of objective functions, a hot patching operation on a target process that is of the M target processes and that meets the hot patch strategy.

It should be noted that for functions of the functional units in the hot patching apparatus 30 described in this embodiment of the present invention, reference may be made to related descriptions of step S201 to step S204 in the foregoing method embodiment described in FIG. 7. Details are not described herein again.

This application provides a computer storage medium. The computer storage medium stores a computer program. When the computer program is executed by a processor, any one of the hot patching methods is implemented.

An embodiment of this application provides an electronic device. The electronic device includes a processor, and the processor is configured to support the electronic device to implement a corresponding function in any one of the hot patching methods. The electronic device may further include a memory. The memory is configured to be coupled to the processor, and the memory stores program instructions and data that are necessary for the electronic device. The electronic device may further include a communication interface, configured for communication between the electronic device and another device or a communication network.

This application provides a chip system. The chip system includes a processor, configured to support an electronic device to implement a function, for example, generating or processing information in the hot patching method. In a possible design, the chip system further includes a memory. The memory is configured to store program instructions and data that are necessary for an electronic device. The chip system may include a chip, or may include a chip and another discrete component.

This application provides a computer program. The computer program includes instructions, and when the computer program is executed by a computer, the computer is enabled to perform the user-mode hot patching method.

In the foregoing embodiments, descriptions of each embodiment have respective focuses. For a part that is not described in detail in an embodiment, refer to related descriptions in other embodiments.

It should be noted that, for brief description, the foregoing method embodiments are represented as a series of actions. However, persons skilled in the art should understand that this application is not limited to the described order of the actions, because according to this application, some steps may be performed in other orders or simultaneously. In addition, persons skilled in the art should also understand that embodiments described in this specification are example embodiments, and the related actions and modules are not necessarily mandatory to this application.

In the several embodiments provided in this application, it should be understood that the disclosed apparatus may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic or other forms.

The foregoing units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units are integrated into one unit. The integrated unit may be implemented in a form of hardware, or may be implemented in a form of a software functional unit.

When the foregoing integrated unit is implemented in the form of a software functional unit and sold or used as an independent product, the integrated unit may be stored in a computer-readable storage medium. Based on such an understanding, the technical solutions of this application essentially, or the part contributing to the conventional technology, or all or some of the technical solutions may be implemented in the form of a software product. The computer software product is stored in a storage medium and includes several instructions for instructing a computer device (which may be a personal computer, a server, a network device, or the like, and may be specifically a processor in a computer device) to perform all or some of the steps of the methods described in embodiments of this application. The foregoing storage medium may include any medium that can store program code, such as a USB flash drive, a removable hard disk, a magnetic disk, an optical disc, a read-only memory (Read-Only Memory, ROM for short), or a random access memory (Random Access Memory, RAM for short).

The foregoing embodiments are merely intended for describing the technical solutions of this application rather than limiting this application. Although this application is described in detail with reference to the foregoing embodiments, persons of ordinary skill in the art should understand that they may still make modifications to the technical solutions described in the foregoing embodiments or make equivalent replacements to some technical features thereof. These modifications or substitutions do not make the essence of the corresponding technical solutions depart from the spirit and scope of the technical solutions of embodiments of this application.

## Claims

1. A hot patching method, wherein the method comprises:
determining a patch file generated for a plurality of objective functions;
determining M target processes from N processes based on the plurality of objective functions, and recording initial call information of the M target processes, wherein the initial call information comprises information indicating that each of the target processes calls the plurality of objective functions, N and M are integers greater than 0, and N is greater than or equal to M;
determining current call information corresponding to each of the M target processes, wherein each piece of the current call information comprises information indicating that a corresponding target process currently calls the plurality of objective functions; and
separately performing a hot patching operation on the M target processes based on the initial call information, the current call information corresponding to each of the target processes, and the patch file.

2. The method according to claim 1, wherein the patch file comprises repair information of each of the plurality of objective functions, and the determining a patch file generated for a plurality of objective functions comprises:
comparing original code of a plurality of functions with repair code of the plurality of functions, and determining the plurality of obj ective functions from the plurality of functions; and
determining the repair information of each of the plurality of obj ective functions based on the repair code.

3. The method according to claim 2, wherein the comparing original code of a plurality of functions with repair code of the plurality of functions, and determining the plurality of objective functions from the plurality of functions comprises:
separately running the original code and the repair code, and obtaining first intermediate information of the original code and second intermediate information of the repair code by modifying a compiler parameter; and
determining the plurality of objective functions from the plurality of functions based on the first intermediate information and the second intermediate information.

4. The method according to any one of claims 1 to 3, wherein the determining M target processes from N processes based on the plurality of objective functions comprises:
determining whether each of the N processes calls at least one of the plurality of objective functions, wherein the N processes comprise one or more of a running process, a newly pulled process, and a to-be-pulled process; and
determining a corresponding process as the target process if at least one of the plurality of objective functions is called.

5. The method according to claim 4, wherein the method further comprises:
replacing a memory page corresponding to each of the M target processes with a software interrupt instruction, wherein the software interrupt instruction is used to suspend running of a corresponding target process; and
obtaining the initial call information of the M target processes.

6. The method according to any one of claims 1 to 5, wherein the determining current call information corresponding to each of the M target processes comprises:
recording information indicating that each of the M target processes currently calls the plurality of objective functions, and updating the corresponding current call information.

7. The method according to any one of claims 2 to 6, wherein the separately performing a hot patching operation on the M target processes based on the initial call information, the current call information corresponding to each of the target processes, and the patch file comprises:
performing, according to a hot patch strategy and based on the initial call information, the current call information corresponding to each of the target processes, and the repair information of each of the plurality of objective functions, a hot patching operation on a target process that is of the M target processes and that meets the hot patch strategy.

8. A hot patching apparatus, wherein the apparatus comprises:
a first processing unit, configured to determine a patch file generated for a plurality of objective functions;
a second processing unit, configured to determine M target processes from N processes based on the plurality of obj ective functions, and record initial call information of the M target processes, wherein the initial call information comprises information indicating that each of the target processes calls the plurality of objective functions, N and M are integers greater than 0, and N is greater than or equal to M;
a third processing unit, configured to determine current call information corresponding to each of the M target processes, wherein each piece of the current call information comprises information indicating that a corresponding target process currently calls the plurality of objective functions; and
a fourth processing unit, configured to separately perform a hot patching operation on the M target processes based on the initial call information, the current call information corresponding to each of the target processes, and the patch file.

9. The apparatus according to claim 8, wherein the patch file comprises repair information of each of the plurality of objective functions, and the first processing unit is specifically configured to:
compare original code of a plurality of functions with repair code of the plurality of functions, and determine the plurality of objective functions from the plurality of functions; and
determine the repair information of each of the plurality of objective functions based on the repair code.

10. The apparatus according to claim 9, wherein the first processing unit is specifically configured to:
separately run the original code and the repair code, and obtain first intermediate information of the original code and second intermediate information of the repair code by modifying a compiler parameter; and
determine the plurality of obj ective functions from the plurality of functions based on the first intermediate information and the second intermediate information.

11. The apparatus according to any one of claims 8 to 10, wherein the second processing unit is specifically configured to:
determine whether each of the N processes calls at least one of the plurality of objective functions, wherein the N processes comprise one or more of a running process, a newly pulled process, and a to-be-pulled process; and
determine a corresponding process as the target process if at least one of the plurality of objective functions is called.

12. The apparatus according to claim 11, wherein the second processing unit is specifically configured to:
replace a memory page corresponding to each of the M target processes with a software interrupt instruction, wherein the software interrupt instruction is used to suspend running of a corresponding target process; and
obtain the initial call information of the M target processes.

13. The apparatus according to any one of claims 8 to 12, wherein the third processing unit is specifically configured to:
record information indicating that each of the M target processes currently calls the plurality of objective functions, and update the corresponding current call information.

14. The apparatus according to any one of claims 9 to 13, wherein the fourth processing unit is specifically configured to:
perform, according to a hot patch strategy and based on the initial call information, the current call information corresponding to each of the target processes, and the repair information of each of the plurality of objective functions, a hot patching operation on a target process that is of the M target processes and that meets the hot patch strategy.

15. A computer storage medium, wherein the computer storage medium stores a computer program; and when the computer program is executed by a processor, the method according to any one of claims 1 to 7 is implemented.

16. A computer program, wherein the computer program comprises instructions, and when the computer program is executed by a computer, the computer is enabled to perform the method according to any one of claims 1 to 7.
